# EUROPÄISCHE PATENTSCHRIFT

(11) **EP 4 127 615 B1**
(45) Veröffentlichungstag und Bekanntmachung des Hinweises auf die Patenterteilung: **01.05.2024**
(21) Anmeldenummer: 21716595.0
(22) Anmeldetag: 29.03.2021
(51) Int. Cl.: G01F 23/16, G01F 23/22, F17C 13/02, F17C 13/08

(54) **SPEICHERBEHÄLTER FÜR FLÜSSIGEN WASSERSTOFF MIT FÜLLSTANDSANZEIGE**
STORAGE CONTAINER FOR LIQUID HYDROGEN WITH LEVEL INDICATOR
RÉCIPIENT DE STOCKAGE POUR HYDROGÈNE LIQUIDE AVEC INDICATEUR DE NIVEAU

(30) Priorität: 02.04.2020 EP 20020152
(43) Veröffentlichungstag der Anmeldung: 08.02.2023
(73) Patentinhaber: Linde GmbH, 82049 Pullach (DE)
(72) Erfinder: AIGNER, Herbert, 84367 Reut-Taubenbach (DE); SCHÖNBERGER, Manfred, 83342 Tacherting (DE)
(74) Vertreter: Meilinger, Claudia Sabine
(86) Internationale Anmeldenummer: PCT/EP2021/025118
(87) Internationale Veröffentlichungsnummer: WO 2021/197668

(56) Entgegenhaltungen:
- EP-A1- 3 495 711
- DE-A1- 2 524 826
- JP-U- S54 153 267

## Beschreibung

Die Erfindung betrifft einen Speicherbehälter für flüssigen Wasserstoff aufweisend einen Außenbehälter, einen innerhalb des Außenbehälters angeordneten Innenbehälter und eine Vorrichtung zum Anzeigen eines Erreichens eines vorgegebenen Füllstands. Des Weiteren betrifft die vorliegende Erfindung ein Verfahren zum Anzeigen eines Erreichens eines vorgegebene Füllstands eines Speicherbehälters für flüssigen Wasserstoff.

Speicherbehälter für flüssigen Wasserstoff weisen gemäß betriebsinternen Erkenntnissen der Anmelderin bezüglich des Außen- und Innenbehälters jeweils eine zylinderförmige Geometrie mit einem rohrförmigen Basisabschnitt sowie zwei gewölbten Deckelabschnitten auf, die den Basisabschnitt stirnseitig verschließen. Je nach Anforderung wird ein derartiger Speicherbehälter bis zu einem vorgegebenen Füllstand mit flüssigem Wasserstoff befüllt. Der vorgegebene Füllstand kann beispielsweise dann erreicht sein, wenn der Speicherbehälter zu etwa 88 bis 95% mit flüssigem Wasserstoff befüllt ist. Um ein Erreichen des vorgegebenen Füllstands zu detektieren oder anzuzeigen, ist der Anmelderin betriebsinterner Stand der Technik bekannt, bei dem eine Füllstandsanzeige mit Hilfe einer sogenannten Differenzdruckmethode verwirklicht wird. Ferner ist gemäß betriebsinternen Erkenntnissen der Anmelderin eine kapazitive Messung des Füllstands durch eine Veränderung der Dielektrizitätskonstante im flüssigen Wasserstoff möglich. Durch die physikalischen Eigenschaften von Wasserstoff ist eine zuverlässige Füllstandsanzeige jedoch technisch nur sehr aufwendig realisierbar. Hierbei ist es erforderlich, verschiedene physikalische Größen zu messen und komplex zu verrechnen.

Vor diesem Hintergrund besteht die Aufgabe der vorliegenden Erfindung darin, einen bezüglich der Füllstandsmessung verbesserten Speicherbehälter für flüssigen Wasserstoff der eingangs genannten Art und ein verbessertes Füllstandsmessverfahren eines Speicherbehälters für flüssigen Wasserstoff bereitzustellen.

Demgemäß wird ein Speicherbehälter für flüssigen Wasserstoff mit einem Außenbehälter, einem innerhalb des Außenbehälters angeordneten Innenbehälter und einer Vorrichtung zum Anzeigen eines Erreichens eines vorgegebenen Füllstands für den flüssigen Wasserstoff vorgeschlagen. Die Vorrichtung umfasst eine innerhalb des Innenbehälters angeordnete Zelle, welche mit einem Gas gefüllt ist, welches sich bei einem Eintauchen der Zelle in den flüssigen Wasserstoff verflüssigt, eine Druckanzeigeeinrichtung, welche einen Druckabfall in der Zelle bei einem Verflüssigen des Gases und damit das Erreichen des vorgegebenen Füllstands anzeigt, und ein Heizelement, welches kontinuierlich Wärme in das Gas einbringt.

Dadurch, dass das Heizelement vorgesehen ist, ist gewährleistet, dass das Gas in der Zelle nicht verflüssigt, bevor der flüssige Wasserstoff die Zelle umspült bzw. ein vorgegebener Füllstand erreicht ist. Zudem wird gewährleistet, dass das Gas in der Zelle während eines erneuten Befüllens des Speicherbehälters sicher wieder verdampft und eine zuverlässige Füllstandsmessung auch in geschlossenen und hochisolierten Behältern, wie einem vorliegenden doppelwandigen Speicherbehälter für Wasserstoff möglich ist. Ferner ist der erforderliche Wärmeeintrag nur während des Befüllens des Speicherbehälters erforderlich. Ein konstantes Kälteleck wird somit ausgeschlossen. Die in JPS54153267U beschriebene Füllstandsmesseinrichtung, die keine Heizeinrichtung aufweist, ist für offene Dewargefäße offenbart.

Die Vorrichtung kann auch als Anzeigevorrichtung, als Grenzwertgeber oder als Grenzwertgebervorrichtung bezeichnet werden. Der Speicherbehälter umfasst einen Außenbehälter, einen innerhalb des Außenbehälters angeordneten Innenbehälter sowie vorzugsweise ein zwischen dem Außenbehälter und dem Innenbehälter angeordnetes Dämmelement oder Isolierelement. Die Zelle ist innerhalb des Innenbehälters angeordnet. Die Vorrichtung kann neben flüssigem Wasserstoff auch für andere kryogene Flüssigkeiten eingesetzt werden. Beispiele für kryogene Fluide oder Flüssigkeiten, oder Kryogene, sind beispielsweise flüssiges Helium, flüssiger Stickstoff oder flüssiger Sauerstoff.

Die Zelle wird dann, wenn der vorgegebene Füllstand erreicht wird, zumindest teilweise von dem flüssigen Wasserstoff umspült. Unter einer "Zelle" ist vorliegend ein Bauteil zu verstehen, das einen Innenraum umschließt, in welchem das Gas aufgenommen ist.

Der Begriff "Zelle" kann vorliegend auch durch den Begriff "Behälter" bezeichnet werden. Die Zelle kann auch als Gaszelle oder als Gasbehälter bezeichnet werden.

Das Gas kann ein beliebiges Gas sein, welches die Eigenschaft aufweist, dass dieses sich bei einem Eintauchen der Zelle in den flüssigen Wasserstoff verflüssigt. Aufgrund dieses Phasenübergangs des Gases von gasförmig zu flüssig kommt es in der Zelle zu einem Druckabfall, welcher von der Druckanzeigeeinrichtung erfasst oder angezeigt werden kann. Der Druckabfall ist somit eine Information, die das Erreichen des vorgegebenen Füllstands anzeigt.

Die Druckanzeigeeinrichtung ist vorzugsweise außerhalb des Speicherbehälters angeordnet, so dass diese von einem Techniker eingesehen werden kann. Das Heizelement ist vorzugsweise ein elektrisches Heizelement. Das Heizelement kann beispielsweise ein elektrischer Widerstand sein. Die Zelle ist also beheizt und kann als beheizte Zelle bezeichnet werden. Dass das Heizelement die Wärme "kontinuierlich" in das Gas einbringt, bedeutet vorliegend, dass das Heizelement bevorzugt während eines gesamten Füllvorgangs oder Befüllvorgangs des Speicherbehälters mit dem flüssigen Wasserstoff bestromt wird und so die Wärme in das Gas einbringt. Das Heizelement bringt die Wärme somit bereits vor dem Eintauchen der Zelle in den flüssigen Wasserstoff in das Gas ein. Dabei wird jedoch nur so viel Wärme in das Gas eingebracht, dass dieses sich bei dem Eintauchen der Zelle in den flüssigen Wasserstoff verflüssigt.

Sobald die Zelle nicht mehr von dem flüssigen Wasserstoff umspült wird beziehungsweise nicht mehr in diesen eingetaucht ist, wird das Gas durch die von dem Heizelement eingebrachte Wärme wieder verdampft. Es kommt dann in der Zelle wieder zu einem Druckanstieg, der ein Abfallen des Flüssigkeitspegels des flüssigen Wasserstoffs unter den vorgegebenen Füllstand anzeigt. Es wird also nur so viel Wärme in das Gas eingebracht, dass sich das Gas bei dem Eintauchen der Zelle in den flüssigen Wasserstoff verflüssigt und dass das Gas wieder verdampft, sobald die Zelle nicht mehr in den flüssigen Wasserstoff eingetaucht ist.

Beispielsweise bringt das Heizelement während des Füllvorgangs kontinuierlich eine Wärmeleistung von 5 W in das Gas ein. Nach Beendigung des Füllvorgangs wird das Heizelement bevorzugt nicht mehr bestromt. Aufgrund des Heizelements ist es zum Verdampfen des Gases nicht erforderlich, von extern des Speicherbehälters Wärme in die Zelle beziehungsweise in das Gas einzubringen. Hierdurch kann, wie zuvor erwähnt, ein konstantes Kälteleck, über welches Wärme von extern in die Zelle eingebracht wird, ausgeschlossen werden.

Gemäß einer Ausführungsform ist das Gas Neon.

Es kann jedoch auch ein beliebiges anderes Gas eingesetzt werden. Insbesondere ist der Siedepunkt des in der Zelle aufgenommenen Gases höher als der Siedepunkt des flüssigen Wasserstoffs, so dass sich das Gas bei dem Eintauchen der Zelle in den flüssigen Wasserstoff verflüssigt. Die Zelle kann als Neonzelle, insbesondere als beheizte Neonzelle, bezeichnet werden.

Gemäß einer weiteren Ausführungsform ist die Zelle kugelförmig.

Hierdurch ergibt sich bei größtmöglichem Volumen eine kleinstmögliche Oberfläche der Zelle. Die Zelle kann jedoch auch zylinderförmig oder quaderförmig sein oder jede beliebige andere Geometrie aufweisen.

Gemäß einer weiteren Ausführungsform umfasst die Vorrichtung ferner eine Leitung, welche die Zelle trägt.

Die Leitung ist insbesondere durch eine Wandung des Speicherbehälters hindurchgeführt. Die Leitung kann beispielsweise eine Edelstahlleitung sein. Die Zelle kann an der Leitung derart aufgehängt sein, dass die Leitung eine Gewichtskraft der Zelle aufnimmt. Die Leitung hält die Zelle in einer vorgegebenen Position fixiert. Die Zelle kann also nicht auf dem flüssigen Wasserstoff aufschwimmen.

Gemäß einer weiteren Ausführungsform ist der Zelle das Gas mit Hilfe der Leitung zuführbar, wobei ein Kabel zum Bestromen des Heizelements durch die Leitung hindurch zu der Zelle geführt ist.

Die Leitung kann somit eine Doppelfunktion erfüllen, nämlich das Zuführen des Gases zu der Zelle und das Aufnehmen des Kabels, welches zu dem Heizelement führt. Insbesondere ist das Kabel mittig in der Leitung aufgenommen. Das Kabel kann in einem Schutzrohr aufgenommen sein, das mittig in der Leitung angeordnet ist.

Gemäß einer weiteren Ausführungsform umfasst die Vorrichtung ferner ein Ventil, mit dessen Hilfe das Gas der Leitung zuführbar ist.

An der Leitung kann ein Stutzen vorgesehen sein, an welchem das Ventil angebracht ist. Mit Hilfe des Ventils kann das Gas nachgefüllt werden oder das Gas kann vor dem Befüllen des Speicherbehälters in die Zelle eingebracht werden.

Gemäß einer weiteren Ausführungsform ist die Druckanzeigeeinrichtung mit der Leitung in Fluidverbindung.

Über die Leitung ist die Druckanzeigeeinrichtung mit der Zelle in Fluidverbindung. "In Fluidverbindung" bedeutet vorliegend, dass das Gas von der Zelle über die Leitung zu der Druckanzeigeeinrichtung und umgekehrt strömen kann. Die Druckanzeigeeinrichtung kann an dem zuvor erwähnten Stutzen angebracht sein, der auch das Ventil trägt.

Gemäß einer weiteren Ausführungsform ist die Druckanzeigeeinrichtung ein Manometer.

Hierdurch ist ein einfacher Aufbau der Vorrichtung möglich. Ein den Speicherbehälter befüllender Techniker kann anhand des Druckabfalls einfach erkennen, dass der vorgegebene Füllstand erreicht ist. Die Druckanzeigeeinrichtung kann jedoch auch ein Drucksensor sein oder einen Drucksensor umfassen.

Gemäß einer weiteren Ausführungsform ist das Heizelement innerhalb eines von der Zelle umschlossenen Innenraums der Zelle angeordnet.

Hierdurch kommt das Heizelement nicht mit dem flüssigen Wasserstoff in Kontakt. Alternativ kann das Heizelement jedoch auch außenseitig an der Zelle vorgesehen sein. Besonders bevorzugt ist das Heizelement jedoch in dem Innenraum der Zelle angeordnet. In dem Innenraum ist auch das Gas aufgenommen.

Gemäß einer weiteren Ausführungsform umfasst die Vorrichtung ferner eine Steuereinheit zum Ansteuern des Heizelements.

Die Steuereinheit kann im einfachsten Fall ein Schalter sein, der es ermöglicht, das Heizelement über das durch die Leitung geführte Kabel zu bestromen. Die Steuereinheit kann jedoch auch ein Rechner sein oder einen Rechner umfassen. Für den Fall, dass die Druckanzeigeeinrichtung ein Drucksensor ist oder einen Drucksensor umfasst, kann die Steuereinheit auch geeignet sein, Sensorsignale der Druckanzeigeeinrichtung zu erfassen, auszuwerten und/oder anzuzeigen.

Der Speicherbehälter ist insbesondere für maritime Anwendungen geeignet. Der Speicherbehälter kann daher als maritimer Speicherbehälter bezeichnet werden. Beispielsweise kann der Speicherbehälter an einem Fahrzeug, insbesondere an einem Wasserfahrzeug, montiert sein. Demgemäß wird auch ein Fahrzeug, insbesondere ein Wasserfahrzeug, mit einem derartigen Speicherbehälter vorgeschlagen. Der Speicherbehälter kann auch als Speichertank, als Wasserstoff-Speicherbehälter oder als Wasserstoff-Speichertank bezeichnet werden. Der Speicherbehälter ist vorzugsweise zum Aufnehmen von flüssigem Wasserstoff geeignet. Der Speicherbehälter kann jedoch auch für andere kryogene Flüssigkeiten eingesetzt werden. Beispiele für kryogene Fluide oder Flüssigkeiten, oder Kryogene, sind beispielsweise flüssiges Helium, flüssiger Stickstoff oder flüssiger Sauerstoff.

In dem Speicherbehälter bildet sich nach oder bei dem Einfüllen des Wasserstoffs eine Gaszone mit gasförmigem Wasserstoff sowie eine darunterliegende Flüssigkeitszone mit flüssigem Wasserstoff. Zwischen der Gaszone und der Flüssigkeitszone ist eine Phasengrenze vorgesehen. Sobald die Phasengrenze den vorgegebenen Füllstand erreicht, ist der Speicherbehälter gefüllt. Der Wasserstoff weist also nach dem Einfüllen in den Speicherbehälter zwei Phasen mit unterschiedlichen Aggregatszuständen, nämlich flüssig und gasförmig, auf. Der Wasserstoff kann von der flüssigen Phase in die gasförmige Phase und umgekehrt übergehen.

Gemäß einer Ausführungsform ist eine die Zelle tragende Leitung der Vorrichtung fest mit einer Wandung des Speicherbehälters verbunden.

Beispielsweise kann die Leitung in die Wandung eingeschweißt sein. Die Leitung ist vorzugsweise eine Edelstahlleitung.

Der Speicherbehälter umfasst, wie vorstehend ausgeführt, einen Außenbehälter und einen innerhalb des Außenbehälters angeordneten Innenbehälter, wobei die Zelle innerhalb des Innenbehälters angeordnet ist. Vorzugsweise sind der Außenbehälter und der Innenbehälter aus Edelstahl gefertigt. Zwischen dem Außenbehälter und dem Innenbehälter kann ein Dämmelement oder Isolierelement zur Wärmedämmung vorgesehen sein. Das Isolierelement dient der Wärmedämmung des Innenbehälters. Die zuvor erwähnte Leitung kann mit dem Außenbehälter und mit dem Innenbehälter verschweißt sein.

Weiterhin wird ein Verfahren zum Anzeigen eines Erreichens eines vorgegebenen Füllstands eines Speicherbehälters für flüssigen Wasserstoff aufweisend einen Außenbehälter, einen innerhalb des Außenbehälters angeordneten Innenbehälter vorgeschlagen. Das Verfahren umfasst die folgenden Schritte: a) Eintauchen einer innerhalb des Innenbehälters angeordneten Zelle in den flüssigen Wasserstoff bei Erreichen des vorgegebenen Füllstands, wobei die Zelle dadurch in den flüssigen Wasserstoff eintaucht, dass der Wasserstoffpegel oder Flüssigkeitspegel des flüssigen Wasserstoffs innerhalb des Innenbehälters bis zu dem vorgegebenen Füllstand ansteigt und die Zelle von dem flüssigen Wasserstoff zumindest teilweise umspült wird, b) Verflüssigen eines in der Zelle aufgenommenen Gases mit Hilfe des flüssigen Wasserstoffs, c) kontinuierliches Einbringen von Wärme in das Gas mit Hilfe eines Heizelements, und d) Anzeigen eines Druckabfalls in der Zelle bei dem Verflüssigen des Gases und damit des Erreichens des vorgegebenen Füllstands mit Hilfe einer Druckanzeigeeinrichtung.

Sobald die Zelle zumindest teilweise von dem flüssigen Wasserstoff umspült wird, verflüssigt sich das in der Zelle aufgenommene Gas. Dabei wird mit Hilfe des Heizelements nur so viel Wärme in das Gas eingebracht, dass dieses sich beim Umspülen der Zelle mit dem flüssigen Wasserstoff trotz des Wärmeeintrags verflüssigt. Der Phasenübergang des Gases von gasförmig zu flüssig führt zu einem Druckabfall in der Zelle, der mit Hilfe der Druckanzeigeeinrichtung angezeigt wird. Der Druckabfall ist somit ein Indiz dafür, dass der vorgegebene Füllstand erreicht ist. Sobald die Zelle jedoch nicht mehr in den flüssigen Wasserstoff eingetaucht ist, wird das Gas mit Hilfe des Heizelements wieder verdampft. Dieser Phasenübergang führt zu einem Druckanstieg in der Zelle, der ebenfalls mit Hilfe der Druckanzeigeeinrichtung angezeigt wird. Der Druckanstieg ist ein Indiz dafür, dass der Wasserstoffpegel unter den vorgegebenen Füllstand abgefallen ist.

Gemäß einer Ausführungsform wird die Wärme während der Schritte a), b), c) und d) in das Gas eingebracht. Das heißt, die Wärme wird vorzugsweise während des gesamten Befüllvorgangs des Speicherbehälters mit dem flüssigen Wasserstoff in das Gas eingebracht. Bevorzugt bringt das Heizelement ausschließlich während des Befüllvorgangs Wärme in das Gas ein. Außerhalb eines Befüllvorgangs bringt das Heizelement vorzugsweise keine Wärme in das Gas ein. Im Falle eines elektrischen Heizelements wird dieses bevorzugt ausschließlich während des Befüllvorgangs bestromt. Somit wird das elektrische Heizelement vorzugsweise außerhalb des Befüllvorgangs nicht bestromt.

Die für für den Speicherbehälter erläuterten Ausführungsformen und Erläuterungen gelten für das Verfahren entsprechend und umgekehrt.

"Ein" ist vorliegend nicht zwingend beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine Beschränkung auf genau die genannte Anzahl an Elementen gegeben ist. Vielmehr sind zahlenmäßige Abweichungen nach oben und nach unten möglich, soweit nichts Gegenteiliges angegeben ist.

Weitere vorteilhafte Ausgestaltungen und Aspekte des Speicherbehälters und/oder des Verfahrens sind Gegenstand der Unteransprüche.

Im Weiteren werden der Speicherbehälter und/oder das Verfahren anhand von bevorzugten Ausführungsformen unter Bezugnahme auf die beigelegten Figuren näher erläutert.
Fig. 1 zeigt eine schematische Seitenansicht einer Ausführungsform eines Fahrzeugs;
Fig. 2 zeigt eine schematische Schnittansicht einer Ausführungsform eines Speicherbehälters für das Fahrzeug gemäß Fig. 1;
Fig. 3 zeigt die Detailansicht III gemäß Fig. 2; und
Fig. 4 zeigt ein schematisches Blockdiagramm einer Ausführungsform eines Verfahrens zum Anzeigen eines Erreichens eines vorgegebenen Füllstands des Speicherbehälters gemäß Fig. 2.

In den Figuren sind gleiche oder funktionsgleiche Elemente mit denselben Bezugszeichen versehen worden, sofern nichts anderes angegeben ist.

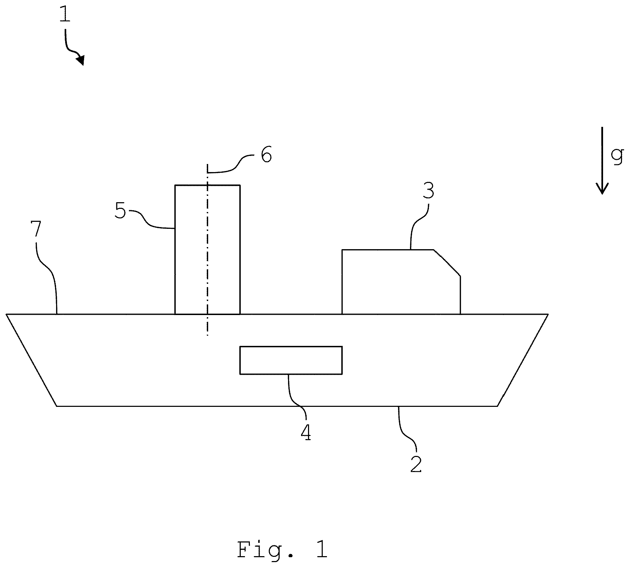

Die Fig. 1 zeigt eine stark vereinfachte schematische Seitenansicht einer Ausführungsform eines Fahrzeugs 1. Das Fahrzeug 1 kann beispielsweise ein maritimes Wasserfahrzeug, insbesondere ein Schiff, sein. Das Fahrzeug 1 kann als maritimes Fahrzeug bezeichnet werden. Insbesondere kann das Fahrzeug 1 eine maritime Personenfähre sein. Alternativ kann das Fahrzeug 1 auch ein Landfahrzeug sein. Nachfolgend wird jedoch davon ausgegangen, dass das Fahrzeug 1 ein Wasserfahrzeug ist.

Das Fahrzeug 1 umfasst einen Rumpf 2, der schwimmfähig ist. An oder auf dem Rumpf 2 ist eine Brücke 3 vorgesehen. Das Fahrzeug 1 wird vorzugsweise mit Wasserstoff betrieben. Hierzu kann das Fahrzeug 1 eine Brennstoffzelle 4 aufweisen. Unter einer "Brennstoffzelle" ist vorliegend eine galvanische Zelle zu verstehen, welche die chemische Reaktionsenergie eines kontinuierlich zugeführten Brennstoffs, vorliegend Wasserstoff, und eines Oxidationsmittels, vorliegend Sauerstoff, in elektrische Energie wandelt. Mit Hilfe der erhaltenen elektrischen Energie kann beispielsweise ein nicht gezeigter Elektromotor angetrieben werden, der wiederum eine Schiffsschraube zum Antreiben des Fahrzeugs 1 antreibt.

Zum Versorgen der Brennstoffzelle 4 mit Wasserstoff ist ein Speicherbehälter 5 zum Speichern von flüssigem Wasserstoff vorgesehen. Der Speicherbehälter 5 ist rotationssymmetrisch zu einer Mittel- oder Symmetrieachse 6 aufgebaut. Der Speicherbehälter 5 kann beispielsweise innerhalb des Rumpfs 2, insbesondere innerhalb eines Maschinenraums, auf der Brücke 3 oder auf einem als Fundament 7 fungierenden Deck des Rumpfs 2 angeordnet sein. Dabei ist die Symmetrieachse 6 entlang einer Schwerkraftrichtung g orientiert. Das heißt, der Speicherbehälter 5 ist aufrecht oder vertikal positioniert. Somit ist die Symmetrieachse 6 senkrecht zu dem Fundament 7 platziert. Für den Fall, dass das Fahrzeug 1 beispielsweise ein auf einen Wasserstoffantrieb umgerüstetes Fahrzeug ist, kann der Speicherbehälter 5 beispielsweise auch in einem Kamin oder Schornstein des Fahrzeugs 1 platziert sein.

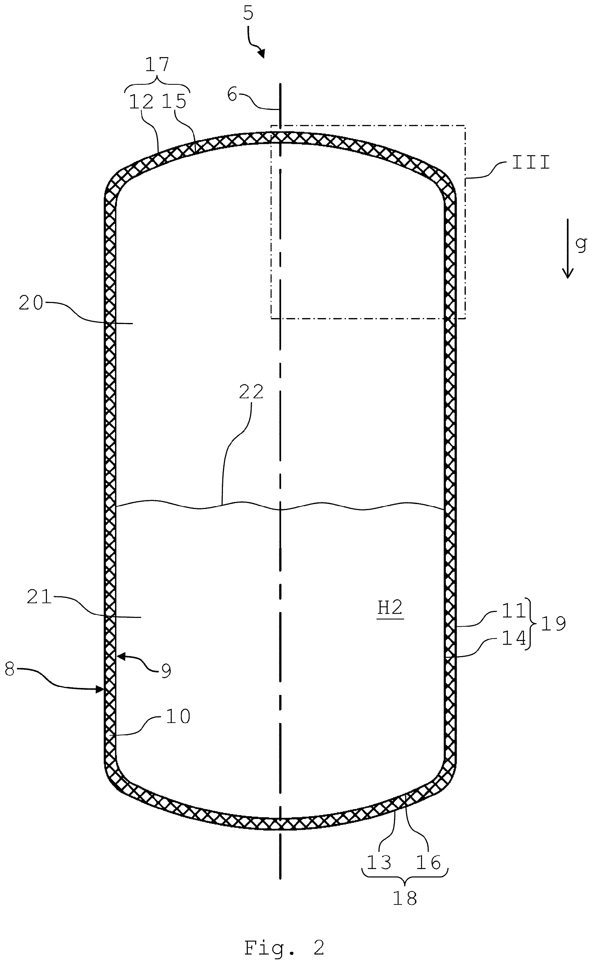

Die Fig. 2 zeigt eine schematische Schnittansicht einer Ausführungsform eines wie zuvor erwähnten Speicherbehälters 5. Der Speicherbehälter 5 kann auch als Speichertank bezeichnet werden. Wie zuvor erwähnt, ist der Speicherbehälter 5 zur Aufnahme von flüssigem Wasserstoff H2 (Siedepunkt 1 bara: 20,268 K = -252,882 °C) geeignet. Daher kann der Speicherbehälter 5 auch als Wasserstoff-Speicherbehälter oder als Wasserstoff-Speichertank bezeichnet werden. Der Speicherbehälter 5 kann jedoch auch für andere kryogene Flüssigkeiten eingesetzt werden. Beispiele für kryogene Fluide oder Flüssigkeiten, oder kurz Kryogene, sind neben dem zuvor erwähnten flüssigen Wasserstoff H2 flüssiges Helium He (Siedepunkt 1 bara: 4,222 K = -268,928 °C), flüssiger Stickstoff N2 (Siedepunkt 1 bara: 77,35 K = -195,80 °C) oder flüssiger Sauerstoff O2 (Siedepunkt 1 bara: 90,18 K = -182,97 °C).

Der Speicherbehälter 5 ist rotationssymmetrisch zu der Symmetrieachse 6 aufgebaut. Der Speicherbehälter 5 umfasst einen rotationssymmetrisch zu der Symmetrieachse aufgebauten Außenbehälter 8 sowie einen rotationssymmetrisch zu der Symmetrieachse 6 aufgebauten Innenbehälter 9. Der Innenbehälter 9 ist dabei vollständig innerhalb des Außenbehälters 8 angeordnet. Zwischen dem Außenbehälter 8 und dem Innenbehälter 9 ist ein Dämmungselement oder Isolierelement 10 vorgesehen. Das Isolierelement 10 kann eine mehrlagige Isolationsschicht (Engl.: Multilayer Insulation, MLI) aufweisen oder als solche ausgebildet sein.

Der Außenbehälter 8 umfasst einen rohr- oder zylinderförmigen Basisabschnitt 11, der rotationssymmetrisch zu der Symmetrieachse 6 aufgebaut ist. Der Basisabschnitt 11 ist stirnseitig beidseits jeweils mit Hilfe eines Deckenabschnitts 12 und eines Bodenabschnitts 13 verschlossen. In der Orientierung der Fig. 2 beziehungsweise entlang der Schwerkraftrichtung g betrachtet ist dabei der Deckenabschnitt 12 oberhalb des Bodenabschnitts 13 angeordnet. Der Basisabschnitt 11 kann im Querschnitt eine kreisrunde oder annähernd kreisrunde Geometrie aufweisen. Der Deckenabschnitt 12 und der Bodenabschnitt 13 sind gewölbt. Der Deckenabschnitt 12 und der Bodenabschnitt 13 sind gegensinnig gewölbt, so dass der Deckenabschnitt 12 und der Bodenabschnitt 13 bezüglich des Basisabschnitts 11 nach außen gewölbt sind. Der Außenbehälter 8 ist fluiddicht, insbesondere gasdicht.

Der Innenbehälter 9 umfasst, wie der Außenbehälter 8, einen rohr- oder zylinderförmigen Basisabschnitt 14, der rotationssymmetrisch zu der Symmetrieachse 6 aufgebaut ist. Der Basisabschnitt 14 ist in der Orientierung der Fig. 2 oberseitig von einem Deckenabschnitt 15 und unterseitig von einem Bodenabschnitt 16 verschlossen. Der Basisabschnitt 14 kann im Querschnitt eine kreisrunde oder annähernd kreisrunde Geometrie aufweisen. Der Deckenabschnitt 15 und der Bodenabschnitt 16 sind gewölbt. Insbesondere sind der Deckenabschnitt 15 und der Bodenabschnitt 16 gegensinnig gewölbt, so dass der Deckenabschnitt 15 und der Bodenabschnitt 16 bezüglich des Basisabschnitts 14 nach außen gewölbt sind. Der Innenbehälter 9 ist fluiddicht, insbesondere gasdicht. Der Außenbehälter 8 und/oder der Innenbehälter 9 können ein nicht gezeigtes Abblasventil aufweisen.

Die beiden Deckenabschnitte 12, 15 bilden mit dem zwischen diesen liegenden Isolierelement 10 eine Decke 17 des Speicherbehälters 5. Die beiden Bodenabschnitte 13, 16 bilden mit dem zwischen diesen liegenden Isolierelement 10 einen Boden 18 des Speicherbehälters 5, und die beiden Basisabschnitte 11, 14 bilden mit dem zwischen diesen liegenden Isolierelement 10 eine rotationssymmetrisch um die Symmetrieachse 6 umlaufende Wandung 19 des Speicherbehälters 5.

In dem Innenbehälter 9 ist der flüssige Wasserstoff H2 aufgenommen. In dem Innenbehälter 9 können, solange sich der Wasserstoff H2 im Zweiphasengebiet befindet, eine Gaszone 20 mit verdampften Wasserstoff H2 und eine Flüssigkeitszone 21 mit flüssigem Wasserstoff H2 vorgesehen sein. Der Wasserstoff H2 weist also nach dem Einfüllen in den Innenbehälter 9 zwei Phasen mit unterschiedlichen Aggregatzuständen, nämlich flüssig und gasförmig, auf. Das heißt, in dem Innenbehälter 9 befindet sich eine Phasengrenze 22 zwischen dem flüssigen Wasserstoff H2 und dem gasförmigen Wasserstoff H2.

Bei einem Befüllen eines derartigen Speicherbehälters 5 mit flüssigem Wasserstoff H2 ist es erforderlich, erfassen zu können, wann der Speicherbehälter 5 vollständig gefüllt ist beziehungsweise wann ein vorgegebener Füllstand in dem Speicherbehälter 5 erreicht wird. Hierdurch wird ein Überlaufen des flüssigen Wasserstoffs H2 verhindert. Es kann beispielsweise eine Füllstandserkennung dadurch verwirklich werden, dass eine Differenzdruckmethode angewandt wird. Ferner kann eine kapazitive Messung durch eine Veränderung der Dielektrizitätskonstante im flüssigen Wasserstoff H2 erfolgen. Diese Verfahren sind jedoch aufwendig. Durch die physikalischen Eigenschaften von Wasserstoff H2 ist eine zuverlässige Füllstandserkennung nicht gegeben beziehungsweise ist technisch nur sehr aufwendig realisierbar, da verschiedene physikalische Größen gemessen und komplex verrechnet werden müssen.

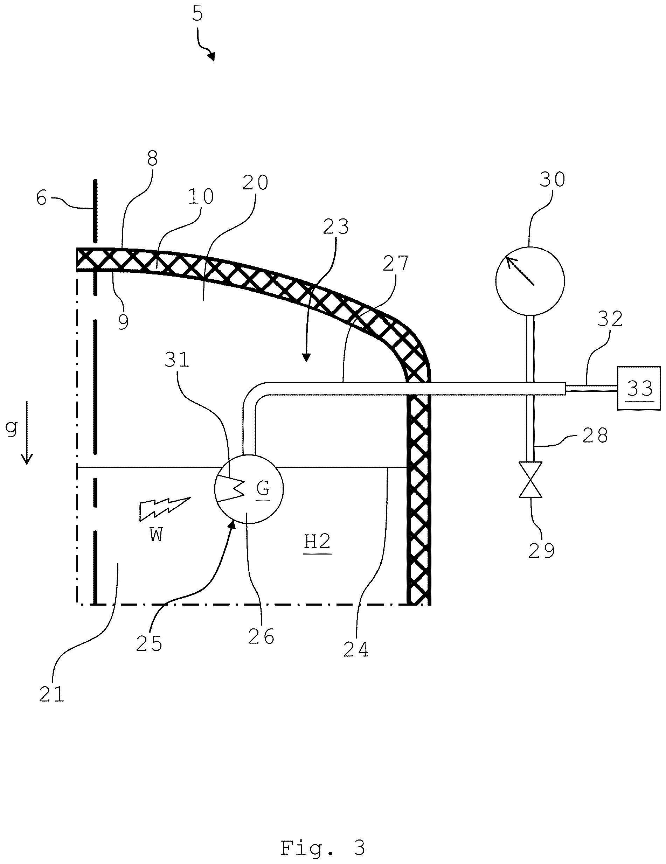

Die Fig. 3 zeigt die Detailansicht III gemäß der Fig. 2. Der Speicherbehälter 5 umfasst eine lediglich in der Fig. 3 gezeigte Vorrichtung 23 zum Anzeigen eines vorgegebenen Füllstands 24 mit flüssigem Wasserstoff H2 in dem Speicherbehälter 5. Für den Fall, dass der Speicherbehälter 5 vollständig gefüllt ist, entspricht der vorgegebene Füllstand 24 der Phasengrenze 22. Der vorgegebene Füllstand 24 ist definiert als eine vorgegebene Position einer in dem Speicherbehälter 5 aufgenommenen Flüssigkeitssäule des flüssigen Wasserstoffs H2. Der vorgegebene Füllstand 24 kann beispielsweise dann erreicht sein, wenn der Speicherbehälter 5 zu 88% bis 95% mit flüssigem Wasserstoff H2 befüllt ist. Der vorgegebene Füllstand 24 kann auch als Grenzwert oder vorgegebener Grenzwert bezeichnet werden.

Die Vorrichtung 23 umfasst eine Zelle 25, die dann, wenn der vorgegebene Füllstand 24 erreicht ist, zumindest teilweise oder vollständig in dem flüssigen Wasserstoff H2 eingetaucht ist. Die Zelle 25 ist innerhalb des Innenbehälters 9 im Bereich der Decke 17 angeordnet. Unter einer "Zelle" ist vorliegend ein abgeschlossenes Volumen zu verstehen. Die Zelle 25 kann aus Edelstahl gefertigt sein. Die Zelle 25 kann kugelförmig sein. Alternativ kann die Zelle 25 auch quaderförmig oder zylinderförmig sein. Die Geometrie der Zelle 25 ist beliebig.

Die Zelle 25 umschließt einen Innenraum 26, in dem ein Gas G aufgenommen ist, das sich bei einem Kontakt der Zelle 25 mit dem flüssigen Wasserstoff H2 verflüssigt. Das Gas G kann beispielsweise Neon Ne (Siedepunkt 1 bara: 27,07 K = -246,08 °C) sein. Die Zelle 25 kann daher als Neonzelle bezeichnet werden. Es können jedoch auch andere geeignete Gase eingesetzt werden. Dabei ist der Siedepunkt des in der Zelle 25 aufgenommenen Gases G höher als der Siedepunkt des flüssigen Wasserstoffs H2, so dass sich das Gas G bei dem Eintauchen der Zelle 25 in den flüssigen Wasserstoff H2 verflüssigt.

Die Zelle 25 ist mit Hilfe einer Leitung 27 fest an dem Speicherbehälter 5 montiert. Die Leitung 27 ist durch den Innenbehälter 9, das Isolierelement 10 und den Außenbehälter 8 hindurchgeführt. Beispielsweise ist die Leitung 27 mit dem Speicherbehälter 5 verschweißt. Durch die Leitung 27 kann das Gas G in die Zelle 25 eingebracht werden. Hierzu kann an der Leitung 27 ein Stutzen 28 mit einem Ventil 29 vorgesehen sein. Über das Ventil 29 kann die Zelle 25 mit dem Gas G befüllt werden. Die Leitung 27 kann aus Edelstahl gefertigt sein.

Ferner umfasst die Vorrichtung 23 eine Druckanzeigeeinrichtung 30, welche einen Druckabfall in der Zelle 25 bei einem Verflüssigen des Gases G und damit ein Erreichen des vorgegebenen Füllstands 24 anzeigt. Die Druckanzeigeeinrichtung 30 kann ein Manometer sein. Die Druckanzeigeeinrichtung 30 kann jedoch auch ein Drucksensor sein oder einen Drucksensor umfassen. Die Druckanzeigeeinrichtung 30 kann an dem Stutzen 28 angebracht sein. Das heißt, an dem Stutzen 28 kann sowohl das Ventil 29 als auch die Druckanzeigeeinrichtung 30 montiert sein. Der Stutzen 28 kann beispielsweise mit der Leitung 27 verschweißt oder verlötet sein.

Die Vorrichtung 23 umfasst ferner ein Heizelement 31, das geeignet ist, Wärme W in die Zelle 25 beziehungsweise in das Gas G einzubringen. Die Zelle 25 ist somit beheizt. Die Zelle 25 kann daher auch als beheizte Zelle, insbesondere als beheizte Neonzelle, bezeichnet werden. Das Heizelement 31 kann ein elektrisches Heizelement sein. Das Heizelement 31 kann in dem Innenraum 26 angeordnet sein. Alternativ kann das Heizelement 31 beispielsweise auch außenseitig an der Zelle 25 vorgesehen sein.

Das Heizelement 31 wird mit Hilfe eines durch die Leitung 27 geführten Kabels 32 bestromt. Das Kabel 32 ist dabei mittig in der Leitung 27 geführt, so dass das Gas G um das Kabel 32 herum durch eine ringförmige Öffnung der Zelle 25 zugeführt werden kann.

Dem Heizelement 31 kann eine Steuereinheit 33 zugeordnet sein, die außerhalb des Speicherbehälters 5 angeordnet ist. Im einfachsten Fall ist die Steuereinheit 33 ein Schalter, der vor oder bei einem Befüllen des Speicherbehälters 5 betätigt wird, um das Heizelement 31 zu bestromen. Die Steuereinheit 33 kann jedoch auch ein Rechner sein oder einen Rechner umfassen. Die Steuereinheit 33 kann für den Fall, dass die Druckanzeigeeinrichtung 30 ein Drucksensor ist oder einen Drucksensor umfasst, auch geeignet sein, ein Signal der Druckanzeigeeinrichtung 30 zu verarbeiten.

Die Funktionalität der Vorrichtung 23 wird nachfolgend erläutert. Je nach Anforderung kann der vorgegebene Füllstand 24 so gewählt werden, dass der Speicherbehälter 5 bei dem Erreichen des vorgegebenen Füllstands 24 zu 88 bis 95% befüllt ist. Bei dem Befüllen des Speicherbehälters 5 muss das Befüllen bei dem Erreichen des vorgegebenen Füllstands 24 beendet werden, um ein Überlaufen des flüssigen Wasserstoffs H2 zu verhindern. Vor dem Befüllen des Speicherbehälters 5 wird die Zelle 25 mit dem Gas G befüllt oder die Zelle 25 ist bereits mit dem Gas G befüllt.

Das Heizelement 31 wird während dem Befüllen des Speicherbehälters 5 bestromt, so dass dieses kontinuierlich etwa 5 W Heizleistung bereitstellt und die Wärme W in das Gas G einbringt. Bei dem Eintauchen der Zelle 25 in den flüssigen Wasserstoff H2, das heißt wenn der vorgegebene Füllstand 24 erreicht ist und die Zelle 25 zumindest teilweise von flüssigem Wasserstopff umspült wird, verflüssigt sich das Gas G, und es kommt zu einem Druckabfall in dem Innenraum 26 der Zelle 25, welcher mit Hilfe der Druckanzeigeeinrichtung 30 angezeigt werden kann. Die Heizleistung des Heizelements 31 ist dabei so bemessen, dass sich das Gas G bei dem Eintauchen der Zelle 25 in den flüssigen Wasserstoff H2 trotz der eingebrachten Wärme W verflüssigt. Bei einem sinkendem Wasserstoffpegel wird mit Hilfe des Heizelements 31 gewährleistet, dass das flüssige Gas G wieder verdampft wird. Dies führt zu einem Druckanstieg in der Zelle 25. Anhand der Druckanzeigeeinrichtung 30 kann dann erkannt werden, dass der Wasserstoffpegel unter den vorgegebenen Füllstand 24 abgesunken ist.

Mit Hilfe des Heizelements 31 ist auch gewährleistet, dass der erforderliche Eintrag der Wärme W nur während der Messaufgabe erforderlich ist. Ein konstantes Kälteleck wird somit ausgeschlossen. Eine eindeutige Indikation des Erreichens des vorgegebenen Füllstands 24 ist mit Hilfe der Vorrichtung 23 möglich.

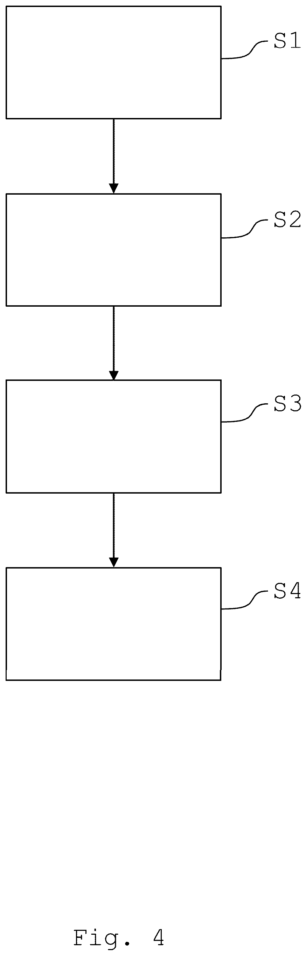

Die Fig. 4 zeigt ein schematisches Blockdiagramm einer Ausführungsform eines Verfahrens zum Anzeigen des Erreichens des vorgegeben Füllstands 24. Das Verfahren wird mit Hilfe der Vorrichtung 23 durchgeführt. In einem Schritt S1 wird die innerhalb des Speicherbehälters 5 angeordnete Zelle 25 in den flüssigen Wasserstoff H2 eingetaucht. Das Eintauchen erfolgt bei dem Erreichen des vorgegebenen Füllstands 24, das heißt, wenn der Wasserstoffpegel in dem Speicherbehälter 5 bis zu dem vorgegebenen Füllstand 24 ansteigt und der flüssige Wasserstoff die Zelle 25 zumindest teilweise umspült. Ein Eintauchen der Zelle 25 erfolgt also nicht durch Bewegen der Zelle 25. Die Zelle 25 ist ortsfest innerhalb des Innenbehälters 9 angeordnet.

In einem Schritt S2 wird das in der Zelle 25 aufgenommene Gas G mit Hilfe des flüssigen Wasserstoffs H2 verflüssigt. Der flüssige Wasserstoff H2 umspült hierbei zumindest teilweise die Zelle 25 und entzieht dem Gas G Wärme, wodurch es sich verflüssigt. Gleichzeitig wird mit Hilfe des Heizelements 31 in einem Schritt S3 kontinuierlich Wärme W in das Gas G eingebracht. Die Heizleistung beträgt beispielsweise 5 W. Die eingebrachte Wärme W verhindert jedoch nicht das Verflüssigen des Gases G, wenn die Zelle 25 in den flüssigen Wasserstoff H2 eintaucht. Sobald die Zelle 25 nicht mehr in den flüssigen Wasserstoff H2 eingetaucht ist bzw. nicht mehr von flüssigem Wasserstoff umspült bzw. umgeben ist, wird das Gas G mit Hilfe der eingebrachten Wärme W wieder verdampft.

In einem Schritt S4 wird mit Hilfe der Druckanzeigeeinrichtung 30 ein Druckabfall in der Zelle 25 bei dem Verflüssigen des Gases G angezeigt. Der Druckabfall wiederum zeigt an, dass der vorgegebene Füllstand 24 erreicht ist. Der Druckabfall resultiert aus dem Phasenübergang des Gases G von dessen gasförmigem Zustand in den flüssigen Zustand. Umgekehrt steigt der Druck wieder an, sobald die Zelle 25 nicht mehr in den flüssigen Wasserstoff H2 eingetaucht ist und das Gas G mit Hilfe des Heizelements 31 verdampft wird. Die Wärme W wird bevorzugt kontinuierlich während aller Schritte S1 bis S4 in das Gas G eingebracht.

### Verwendete Bezugszeichen

- 1: Fahrzeug
- 2: Rumpf
- 3: Brücke
- 4: Brennstoffzelle
- 5: Speicherbehälter
- 6: Symmetrieachse
- 7: Fundament
- 8: Außenbehälter
- 9: Innenbehälter
- 10: Isolierelement
- 11: Basisabschnitt
- 12: Deckenabschnitt
- 13: Bodenabschnitt
- 14: Basisabschnitt
- 15: Deckenabschnitt
- 16: Bodenabschnitt
- 17: Decke
- 18: Boden
- 19: Wandung
- 20: Gaszone
- 21: Flüssigkeitszone
- 22: Phasengrenze
- 23: Vorrichtung
- 24: Füllstand
- 25: Zelle
- 26: Innenraum
- 27: Leitung
- 28: Stutzen
- 29: Ventil
- 30: Druckanzeigeeinrichtung
- 31: Heizelement
- 32: Kabel
- 33: Steuereinheit
- g: Schwerkraftrichtung
- G: Gas
- H2: Wasserstoff
- S1: Schritt
- S2: Schritt
- S3: Schritt
- S4: Schritt
- W: Wärme

## Patentansprüche

1. Speicherbehälter (5) für flüssigen Wasserstoff (H2) aufweisend eine Vorrichtung (23) zum Anzeigen eines Erreichens eines vorgegeben Füllstands (24) des flüssigen Wasserstoffs (H2) mit einer Zelle (25), welche mit einem Gas (G) gefüllt ist, welches sich bei einem Eintauchen der Zelle (25) in den flüssigen Wasserstoff (H2) verflüssigt, einer Druckanzeigeeinrichtung (30), welche einen Druckabfall in der Zelle (25) bei einem Verflüssigen des Gases (G) und damit das Erreichen des vorgegebenen Füllstands (24) anzeigt, **gekennzeichnet durch** einen Außenbehälter (8) und einen innerhalb des Außenbehälters (8) angeordneten Innenbehälter (9), wobei die Zelle (25) innerhalb des Innenbehälters (9) angeordnet ist, und einem Heizelement (31), welches kontinuierlich Wärme (W) in das Gas (G) einbringt.

2. Speicherbehälter (5) nach Anspruch 1, wobei das Gas (G) Neon ist.

3. Speicherbehälter (5) nach Anspruch 1 oder 2, wobei die Zelle (25) kugelförmig ist.

4. Speicherbehälter (5) nach einem der Ansprüche 1 - 3, ferner umfassend eine Leitung (27), welche die Zelle (25) trägt.

5. Speicherbehälter (5) nach Anspruch 4, wobei der Zelle (25) das Gas mit Hilfe der Leitung (27) zuführbar ist, und wobei ein Kabel (32) zum Bestromen des Heizelements (31) durch die Leitung (27) hindurch zu der Zelle (25) geführt ist.

6. Speicherbehälter (5) nach Anspruch 4 oder 5, ferner umfassend ein Ventil (29), mit dessen Hilfe das Gas (G) der Leitung (27) zuführbar ist.

7. Speicherbehälter (5) nach einem der Ansprüche 4 - 6, wobei die Druckanzeigeeinrichtung (30) mit der Leitung (27) in Fluidverbindung ist.

8. Speicherbehälter (5) nach einem der Ansprüche 1 - 7, wobei die Druckanzeigeeinrichtung (30) ein Manometer ist.

9. Speicherbehälter (5) nach einem der Ansprüche 1 - 8, wobei das Heizelement (31) innerhalb eines von der Zelle (25) umschlossenen Innenraums (26) der Zelle (25) angeordnet ist.

10. Speicherbehälter (5) nach einem der Ansprüche 1 - 9, ferner umfassend eine Steuereinheit (33) zum Ansteuern des Heizelements (31).

11. Speicherbehälter nach einem der Ansprüche 1 bis 10, wobei eine die Zelle tragende Leitung (27) der Vorrichtung (23) fest mit einer Wandung (19) des Speicherbehälters (5) verbunden ist.

12. Verfahren zum Anzeigen eines Erreichens eines vorgegeben Füllstands (24) eines Speicherbehälters (5) für flüssigen Wasserstoff (H2) aufweisend einen Außenbehälter (8) und einen innerhalb des Außenbehälters (8) angeordneten Innenbehälter (9), mit folgenden Schritten:
a) Eintauchen (S1) einer innerhalb des Innenbehälters (9) angeordneten Zelle (25) in den flüssigen Wasserstoff (H2) bei Erreichen des vorgegebenen Füllstands (24), wobei die Zelle (25) dadurch in den flüssigen Wasserstoff eintaucht, dass der Flüssigkeitspegel des flüssigen Wasserstoffs innerhalb des Innenbehälters (9) bis zu dem vorgegebenen Füllstand ansteigt und die Zelle (25) von dem flüssigen Wasserstoff zumindest teilweise umspült wird,
b) Verflüssigen (S2) eines in der Zelle (25) aufgenommenen Gases (G) mit Hilfe des flüssigen Wasserstoffs (H2),
c) Kontinuierliches Einbringen (S3) von Wärme (W) in das Gas (G) mit Hilfe eines Heizelements (31), und
d) Anzeigen (S4) eines Druckabfalls in der Zelle (25) bei dem Verflüssigen des Gases (G) und damit des Erreichens des vorgegebenen Füllstands (24) mit Hilfe einer Druckanzeigeeinrichtung (30).

13. Verfahren nach Anspruch 12, wobei die Wärme (W) während der Schritte a), b), c) und d) in das Gas (G) eingebracht wird.

## Claims

1. Storage tank (5) for liquid hydrogen (H2), comprising an apparatus (23) for indicating that a predefined fill level (24) of the liquid hydrogen (H2) has been reached, the apparatus having a cell (25) which is filled with a gas (G) that liquefies when the cell (25) is dipped into the liquid hydrogen (H2), the apparatus having a pressure indicator device (30) which indicates a pressure drop in the cell (25) if the gas (G) liquefies and therefore indicates that the predefined fill level (24) has been reached, **characterized by** an outer tank (8) and an inner tank (9) arranged inside the outer tank (8), the cell (25) being arranged inside the inner tank (9), and the apparatus having a heating element (31) which continuously introduces heat (W) into the gas (G).

2. Storage tank (5) according to claim 1, wherein the gas (G) is neon.

3. Storage tank (5) according to either claim 1 or claim 2, wherein the cell (25) is spherical.

4. Storage tank (5) according to any of claims 1-3, further comprising a line (27) which carries the cell (25).

5. Storage tank (5) according to claim 4, wherein the gas can be supplied to the cell (25) by means o f the line (27), and wherein a cable (32) for energizing the heating element (31) is guided through the line (27) to the cell (25).

6. Storage tank (5) according to either claim 4 or claim 5, further comprising a valve (29) by means of which the gas (G) can be supplied to the line (27).

7. Storage tank (5) according to any of claims 4-6, wherein the pressure indicator device (30) is fluidically connected to the line (27).

8. Storage tank (5) according to any of claims 1-7, wherein the pressure indicator device (30) is a manometer.

9. Storage tank (5) according to any of claims 1-8, wherein the heating element (31) is arranged inside an interior (26) of the cell (25) enclosed by the cell (25).

10. Storage tank (5) according to any of claims 1-9, further comprising a control unit (33) for actuating the heating element (31).

11. Storage tank (5) according to any of claims 1 to 10, wherein a line (27) of the device (23) carrying the cell is fixedly connected to a wall (19) of the storage tank (5).

12. Method for displaying that a predefined fill level (24) of a storage tank (5) for liquid hydrogen (H2), comprising an outer tank (8) and an inner tank (9) arranged inside the outer tank (8), has been reached, comprising the following steps:
a) dipping (S1) a cell (25) arranged inside the inner tank (9) into the liquid hydrogen (H2) when the predefined fill level (24) is reached, wherein the cell (25) is thus dipped into the liquid hydrogen such that the liquid level of the liquid hydrogen inside the inner tank (9) rises up to the predefined fill level and the liquid hydrogen flows at least in part around the cell (25),
b) liquefying (S2) a gas (G) accommodated in the cell (25) by means of the liquid hydrogen (H2),
c) continuously introducing (S3) heat (W) into the gas (G) by means of a heating element (31), and
d) indicating (S4) a pressure drop in the cell (25) if the gas (G) liquefies, and therefore that the predefined fill level (24) has been reached, by means of a pressure indicator device (30).

13. Method according to claim 12, wherein the heat (W) is introduced into the gas (G) during steps a), b), c) and d).

## Revendications

1. Réservoir de stockage (5) pour de l'hydrogène liquide (H2) présentant un dispositif (23) permettant d'indiquer l'atteinte d'un niveau de remplissage prédéfini (24) de l'hydrogène liquide (H2) avec une cellule (25), laquelle est remplie d'un gaz (G) qui se liquéfie lors de l'immersion de la cellule (25) dans l'hydrogène liquide (H2), un appareil d'indication de pression (30) qui indique une chute de pression dans la cellule (25) lors de la liquéfaction du gaz (G) et ainsi l'atteinte du niveau de remplissage prédéfini (24), **caractérisé par** un réservoir extérieur (8) et un réservoir intérieur (9) disposé à l'intérieur du réservoir extérieur (8), dans lequel la cellule (25) est disposée à l'intérieur du réservoir intérieur (9), et un élément chauffant (31) qui introduit en continu de la chaleur (W) dans le gaz (G).

2. Réservoir de stockage (5) selon la revendication 1, dans lequel le gaz (G) est du néon.

3. Réservoir de stockage (5) selon la revendication 1 ou 2, dans lequel la cellule (25) est sphérique.

4. Réservoir de stockage (5) selon l'une des revendications 1 à 3, comprenant en outre une conduite (27) qui supporte la cellule (25).

5. Réservoir de stockage (5) selon la revendication 4, dans lequel le gaz peut être amené à la cellule (25) à l'aide de la conduite (27), et dans lequel un câble (32) permettant d'alimenter l'élément chauffant (31) en courant est guidé jusqu'à la cellule (25) à travers la conduite (27).

6. Réservoir de stockage (5) selon la revendication 4 ou 5, comprenant en outre une soupape (29) à l'aide de laquelle le gaz (G) peut être amené à la conduite (27).

7. Réservoir de stockage (5) selon l'une des revendications 4 à 6, dans lequel l'appareil d'indication de pression (30) est en liaison fluidique avec la conduite (27).

8. Réservoir de stockage (5) selon l'une des revendications 1 à 7, dans lequel l'appareil d'indication de pression (30) est un manomètre.

9. Réservoir de stockage (5) selon l'une des revendications 1 à 8, dans lequel l'élément chauffant (31) est disposé à l'intérieur d'un espace intérieur (26) de la cellule (25) entouré par la cellule (25).

10. Réservoir de stockage (5) selon l'une des revendications 1 à 9, comprenant en outre une unité de commande (33) permettant de commander l'élément chauffant (31).

11. Réservoir de stockage selon l'une des revendications 1 à 10, dans lequel une conduite (27) du dispositif (23) supportant la cellule est reliée de manière fixe à une paroi (19) du réservoir de stockage (5).

12. Procédé permettant d'indiquer l'atteinte d'un niveau de remplissage prédéfini (24) d'un réservoir de stockage (5) pour de l'hydrogène liquide (H2) présentant un réservoir extérieur (8) et un réservoir intérieur (9) disposé à l'intérieur du réservoir extérieur (8), comportant les étapes suivantes :
a) immersion (S1) d'une cellule (25) disposée à l'intérieur du réservoir intérieur (9) dans l'hydrogène liquide (H2) lorsque le niveau de remplissage prédéfini (24) est atteint, dans lequel la cellule (25) est immergée dans l'hydrogène liquide de manière à ce que le niveau de liquide de l'hydrogène liquide à l'intérieur du réservoir intérieur (9) augmente jusqu'au niveau de remplissage prédéfini et la cellule (25) baigne au moins partiellement dans l'hydrogène liquide,
b) liquéfaction (S2) d'un gaz (G) reçu dans la cellule (25) à l'aide de l'hydrogène liquide (H2),
c) introduction continue (S3) de chaleur (W) dans le gaz (G) à l'aide d'un élément chauffant (31), et
d) indication (S4) d'une chute de pression dans la cellule (25) lors de la liquéfaction du gaz (G) et ainsi de l'atteinte du niveau de remplissage prédéfini (24) à l'aide d'un appareil d'indication de pression (30).

13. Procédé selon la revendication 12, dans lequel la chaleur (W) est introduite dans le gaz (G) pendant les étapes a), b), c) et d).
